(19) Europäisches Patentamt / European Patent Office / Office européen des brevets

(11) **EP 4 296 732 A1**

(12) **EUROPEAN PATENT APPLICATION**
published in accordance with Art. 153(4) EPC

(43) Date of publication:
**27.12.2023 Bulletin 2023/52**

(51) International Patent Classification (IPC):
**G02B 6/02** *(2006.01)* **G02B 6/14** *(2006.01)*

(21) Application number: **21926486.8**

(52) Cooperative Patent Classification (CPC):
**G02B 6/02; G02B 6/14**

(22) Date of filing: **17.02.2021**

(86) International application number:
**PCT/JP2021/005851**

(87) International publication number:
**WO 2022/176046 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nippon Telegraph And Telephone Corporation**
**Chiyoda-ku**
**Tokyo 100-8116 (JP)**

(72) Inventors:
• **YAMASHITA, Yoko**
 **Musashino-shi, Tokyo 180-8585 (JP)**
• **MORI, Takayoshi**
 **Musashino-shi, Tokyo 180-8585 (JP)**
• **MATSUI, Takashi**
 **Musashino-shi, Tokyo 180-8585 (JP)**
• **NAKAJIMA, Kazuhide**
 **Musashino-shi, Tokyo 180-8585 (JP)**

(74) Representative: **v. Bezold & Partner Patentanwälte - PartG mbB**
**Ridlerstraße 57**
**80339 München (DE)**

(54) **MODE CONVERSION DEVICE AND DESIGN METHOD**

(57) An objective of the present invention is to provide a mode conversion device capable of designing any coupling efficiency and full width at half maximum, and a design method therefor.

According to the present invention, a mode conversion device includes a long period grating at a core of an optical fiber through which light is able to propagate in at least two propagation modes. The long period grating satisfies a relationship of Expression C1, where a full width at half maximum FWHM is a wavelength band in which the coupling efficiency is a half of coupling efficiency of mode conversion at a center wavelength, C is coupling efficiency, $L_c$ is a complete coupling length, $L_g$ is a grating length, A is a grating pitch, and $\Delta\beta$ is a propagation constant difference between the two propagation modes at the center wavelength of a mode conversion target. [Math. C1]

$$\Lambda = \frac{2\pi}{\Delta\beta}$$

$$C = \sin^2\left(\frac{\pi}{2}\frac{L_g}{L_c}\right)$$

$$FWHM \cdot L_c = b\left|\frac{d\Delta\beta}{d\lambda}\right|^{-1}$$

$$b = -1169.3C + 1705.6$$

(C 1)

EP 4 296 732 A1

# Fig. 1

[1]

(a) WHEN $L_g = L_c$ (COUPLING EFFICIENCY OF 100%)

(b) WHEN $L_g < L_c$ (COUPLING EFFICIENCY < 100%)

**Description**

Technical Field

The present disclosure relates to a mode conversion device in which a long period grating (LPG) is formed in an optical fiber and a design method therefor.

Background Art

Non Patent Literature 1 discloses an LPG in which only light with a certain wavelength is selectively coupled to a cladding mode of an optical fiber.

Citation List

Non Patent Literature

Non Patent Literature 1: Craig D. Poole, etc., "Helical-Grating Two-Mode Fiber Spatial-Mode Coupler", JOURNAL OF LIGHTWAVE TECHNOLOGY, VOL 9, NO 5. MAY 1991

Summary of Invention

Technical Problem

In an LPG, a relationship between coupling efficiency and a full width at half maximum is uniquely obtained. However, when any value of a complete coupling length, a fiber structure, and a center wavelength changes, the relationship between the coupling efficiency and the full width at half maximum also changes. Therefore, in a mode conversion device that has an LPG, there is a problem that it is difficult to arbitrarily design coupling efficiency and a full width at half maximum. "Full width at half maximum" means a wavelength band in which coupling efficiency is a half of coupling efficiency of mode conversion at a center wavelength, and is a wavelength range in which mode conversion of the mode conversion device is possible.

In order to solve the foregoing problems, an objective of the present invention is to provide a mode conversion device capable of designing any coupling efficiency and a full width at half maximum, and a design method therefor.

Solution to Problem

In order to achieve the foregoing objective, a mode conversion device according to the present invention adjusts parameters based on a relationship between a wavelength differential of a propagation constant difference $\Delta\beta$ between two modes to be converted and coupling efficiency and a full width at half maximum.

Specifically, the mode conversion device according to the present invention includes a long period grating at a core of an optical fiber through which light is able to propagate in at least two propagation modes. The long period grating satisfies a relationship of Expression C1.

[Math. C1]

$$\Lambda = \frac{2\pi}{\Delta\beta}$$

$$C = sin^2\left(\frac{\pi}{2}\frac{L_g}{L_c}\right)$$

$$(\mathrm{C}\,1)$$

$$FWHM \cdot L_c = b\left|\frac{d\Delta\beta}{d\lambda}\right|^{-1}$$

$$b = -1169.3C + 1705.6$$

where
a full width at half maximum FWHM is a wavelength band in which the coupling efficiency is a half of coupling efficiency of mode conversion at a center wavelength, C is coupling efficiency, $L_c$ is a complete coupling length, $L_g$ is a grating length, $\Lambda$ is a grating pitch, and $\Delta\beta$ is a propagation constant difference between the two propagation modes at the center wavelength of a mode conversion target.

By forming the LPG, having the grating pitch $\Lambda$ and the grating length $L_g$ and satisfying the relationship of Expression C1, on the core of the optical fiber having the core radius a and the relative refractive index difference $\Delta$ of the core, it is possible to obtain the mode conversion device that has a desired full width at half maximum FWHM and the coupling efficiency C at a desired wavelength.

A specific design method is a design method of determining a design parameter of a long period grating installed at a core of an optical fiber through which light is able to propagate in at least two propagation modes.
The method includes:

granting a core radius a (um) of the optical fiber, a relative refractive index difference $\Delta$ (%), a center wavelength $\lambda_0$ (nm) of the light subjected to mode conversion, coupling efficiency C, and a full width at half maximum FWHM (nm);
acquiring a propagation constant difference $\Delta\beta$ between the two propagation modes at the center wavelength $\lambda_0$ (nm) of a mode conversion target and a wavelength differential $d\Delta\beta/d\lambda$ through mode analysis from the core radius a (um) and the relative refractive index difference $\Delta$ (%) of the optical fiber;
calculating a grating pitch $\Lambda$ of the long period grating in Expression C2;
calculating a coefficient b in Expression C3;
calculating a complete coupling length $L_c$ with Expression C4; and
calculating a grating length $L_g$ in Expression C5, [Math. C2]

$$\Lambda = \frac{2\pi}{\Delta\beta} \qquad (\mathrm{C}\ 2)$$

[Math. C3]

$$b = -1169.3\mathrm{C} + 1705.6 \qquad (\mathrm{C}\ 3)$$

[Math. C4]

$$L_c = \frac{b}{FWHM \cdot \left|\frac{d\Delta\beta}{d\lambda}\right|} \qquad (\mathrm{C}\ 4)$$

where, the full width at half maximum FWHM is a wavelength band in which the coupling efficiency is a half of coupling efficiency of mode conversion at the center wavelength $\lambda_0$. [Math. C5]

$$L_g = \frac{\pi}{2}\frac{L_c}{arcsin\left(\sqrt{C}\right)} \qquad (\mathrm{C}\ 5)$$

Accordingly, the present invention can provide the mode conversion device capable of designing any coupling amount and a full width at half maximum, and a design method therefor.

The mode conversion device according to the present invention further includes a tap waveguide that is at a rear stage of the long period grating in a propagation direction of light and outputs, from a side surface of the optical fiber, light with a desired wavelength converted from one mode to another mode by the long period grating in light propagating through the core of the optical fiber.

The mode conversion device can extract light with a desired wavelength from the light propagating through the optical fiber at a desired power.

Here, in the mode conversion device according to the present invention, a set of the long period grating and the tap waveguide may be vertically aligned in the optical fiber.

In this situation, the long period grating has different design parameters described in Expression C1 so that wavelengths of light converted from the one mode to the other mode are different from each other. Light with a different wavelength can be extracted from each tap waveguide.

In this situation, the grating lengths $L_g$ of the long period grating may be different so that a wavelength of light to be converted from the one mode to the other mode is identical and the coupling efficiency is different. It is possible to extract light with different desired power from each tap waveguide.

The foregoing inventions can be combined where possible.

Advantageous Effects of Invention

The present invention can provide a mode conversion device capable of designing any coupling efficiency and a full width at half maximum and a design method therefor.

Brief Description of Drawings

Fig. 1 is a diagram illustrating an overview of a mode conversion device including a long period grating (LPG).
Fig. 2 is a diagram illustrating an example of a transmission spectrum when a long period grating (LPG) is formed.
Fig. 3 is a diagram illustrating an example of a relationship between a coupling amount and a full width at half maximum (FWHM) when a long period grating (LPG) is formed.
Fig. 4 is a diagram illustrating an example of a relationship between an FWHM and a coupling amount.
Fig. 5 is a diagram illustrating a relationship between a product of the FWHM and $L_c$ and $d\Delta\beta/d\lambda$.
Fig. 6 is a diagram illustrating a relationship between coupling efficiency C and a coefficient b.
Fig. 7 is a diagram illustrating a design method according to the present invention.
Fig. 8 is a diagram illustrating a mode conversion device according to the present invention.
Fig. 9 is a diagram illustrating the mode conversion device according to the present invention.
Fig. 10 is a diagram illustrating the mode conversion device according to the present invention.

Description of Embodiments

Embodiments of the present invention will be described below with reference to the accompanying drawings. The embodiments to be described below are examples of the present invention, and the present invention is not limited to the following embodiments. Like components are denoted by like reference numerals in this specification and the drawings.

(First embodiment)

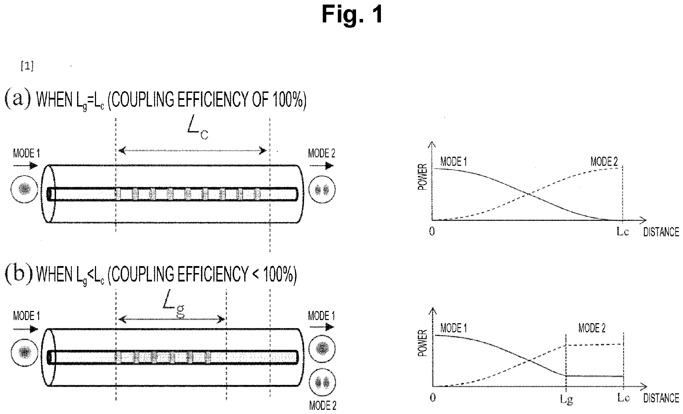

Fig. 1 is a diagram illustrating an overview of a mode conversion device that has a long period grating (LPG). An incident mode (mode 1) is converted into another mode (mode 2) by periodically applying perturbation. At this time, it is necessary for a propagation constant difference ($\Delta\beta$) between mode 1 and mode 2 at a period (A) to which perturbation is applied and a center wavelength ($\lambda_0$) to satisfy a relationship of Expression (1).
[Math. 1]

$$\Lambda = \frac{2\pi}{\Delta\beta} \qquad\qquad (1)$$

Here, a length at which incident mode 1 is completely coupled to mode 2 is referred to as a complete coupling length ($L_c$). $L_c$ is determined in accordance with a mode conversion amount per perturbation. When the mode conversion amount per perturbation is large, the complete coupling length becomes short. On the other hand, when the mode conversion amount per perturbation is large, a loss due to mode mismatch increases. The grating length is defined as $L_g$. When $L_g = L_c$, as described above, mode 1 is completely converted into mode 2, as illustrated in Fig. 1(a). By adjusting $L_g$, a coupling amount (C) from mode 1 to mode 2 can be controlled as illustrated in Fig. 1(b).

At this time, coupling efficiency C at a wavelength $\lambda_0$ is expressed in Expression (2).
[Math. 2]

$$C = sin^2\left(\frac{\pi}{2}\frac{L_g}{L_c}\right)$$

$$(2)$$

When $L_g = L_c$, mode 1 is completely coupled to mode 2, and C = 1.

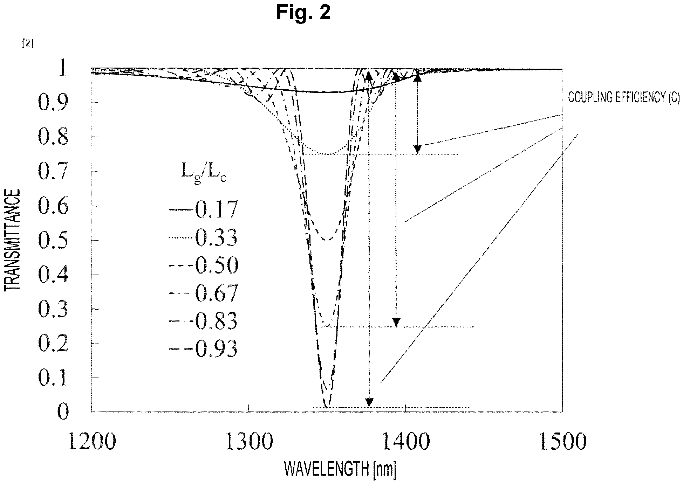

Fig. 2 is a diagram illustrating an example of transmittance of light with a center wavelength ($\lambda_0$) of 1350 nm through a grating of $L_c$ = 3 cm formed in an optical fiber with a core radius (a) of 4.5 um and a relative refractive index difference ($\Delta$) of 0.35% of the core to the cladding. Mode 1 and mode 2 described in Fig. 1 are an LP01 mode and an LP11a mode, respectively. Here, the "transmittance" is transmittance of the LP01 mode when the LP01 mode is incident. The "coupling efficiency" is an amount of attenuation at the center wavelength. Individual lines in Fig. 2 indicate transmittance in a variety of $L_g/L_c$. It can be understood that the coupling efficiency is controllable by controlling $L_g/L_c$ and that a bandwidth tends to be narrowed upon increasing the coupling efficiency (increasing $L_g$).

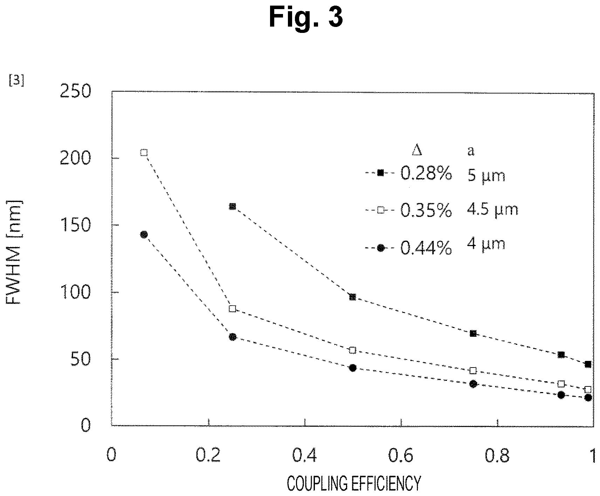

Fig. 3 is a diagram illustrating a relationship between coupling efficiency and a full width at half maximum (FWHM). Under the condition of $\lambda_0$ = 1350 nm and $L_c$ = 3 cm, the core radius a and the core relative refractive index $\Delta$, which represent an optical fiber structure, are set to (a = 5 $\mu$m, $\Delta$ = 0.28%), (a = 4.5 $\mu$m, $\Delta$ = 0.35%), and (a = 4 $\mu$m, $\Delta$ = 0.44%).

As illustrated in Fig. 3, the FWHM decreases as the coupling efficiency increases ($L_g$ increases) and the relationship between the FWHM and the coupling efficiency depends on the optical fiber structure. The relationship between the FWHM and the coupling efficiency changes not only in the optical fiber structure but also in a change in $L_c$ or $\lambda_0$. Here, a wavelength differential ($d\Delta\beta/d\lambda$) of a propagation constant difference $\Delta\beta$ of two modes at the wavelength $\lambda_0$ is introduced as a parameter indicating the optical fiber structure. The propagation constant difference $\Delta\beta$ between the two modes can be obtained from the optical fiber structure through mode analysis.

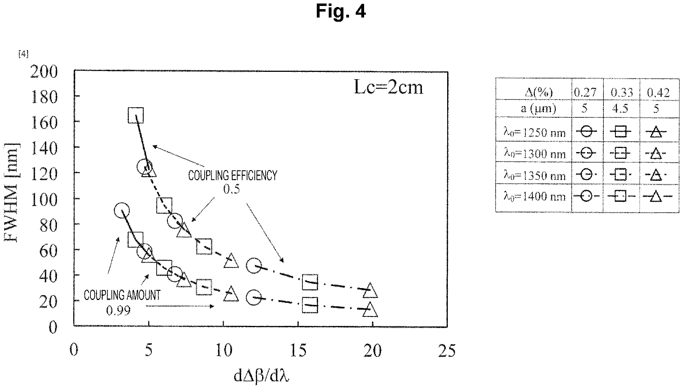

Fig. 4 is a diagram in which the relationship between the FWHM and the coupling efficiency described in Fig. 3 is plotted again when $d\Delta\beta/d\lambda$ is the horizontal axis. In this drawing, data that has different optical fiber structures ($\Delta$, a) and different center wavelengths ($\lambda_0$) are overlapped and displayed. From Fig. 4, it can be understood that the relationship between the FWHM and $d\Delta\beta/d\lambda$ is uniquely determined for the coupling efficiency regardless of the fiber structure and the center wavelength.

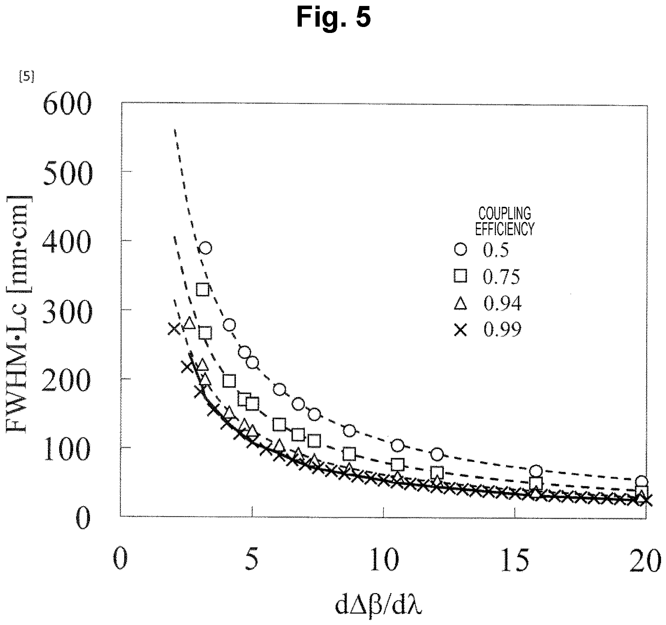

Furthermore, by calculating a product of the FWHM and $L_c$, the relationship between the FWHM and $d\Delta\beta/d\lambda$ is uniquely determined for the coupling efficiency regardless of $L_c$. Fig. 5 is a diagram illustrating the relationship between the product of the FWHM and $L_c$ and $d\Delta\beta/d\lambda$. Each plot indicates the relationship between the product of FWHM and $L_c$ and $d\Delta\beta/d\lambda$ obtained from the calculation, and a broken line indicates an approximate function obtained for each coupling efficiency. The approximate functions for each coupling efficiency are expressed in Expressions (3) to (6).

[Math. 3]

$$FWHM \cdot L_{c0.5} = 1121\left|\frac{d\Delta\beta}{d\lambda}\right|^{-1}$$

$$(3)$$

[Math. 4]

$$FWHM \cdot L_{c0.75} = 810.3\left|\frac{d\Delta\beta}{d\lambda}\right|^{-1}$$

$$(4)$$

[Math. 5]

$$FWHM \cdot L_{c0.94} = 628.5\left|\frac{d\Delta\beta}{d\lambda}\right|^{-1}$$

$$(5)$$

[Math. 6]

$$FWHM \cdot L_{c0.99} = 546 \left| \frac{d\Delta\beta}{d\lambda} \right|^{-1} \tag{6}$$

As expressed in Expressions (3) to (6), it can be understood that the relationship between the product of the FWHM and $L_c$ and $d\Delta\beta/d\lambda$ can be approximated to an inversely proportional expression expressed in Expression (7).
[Math. 7]

$$FWHM \cdot L_c = b \left| \frac{d\Delta\beta}{d\lambda} \right|^{-1} \tag{7}$$

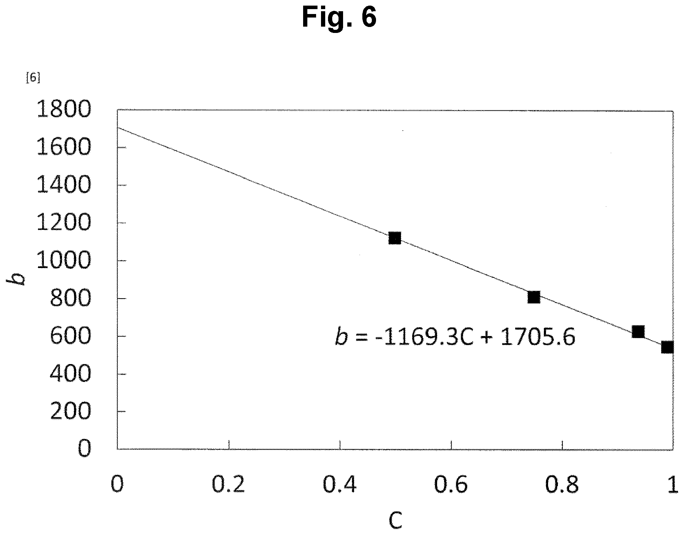

Here, a relationship between the coupling efficiency and a coefficient b of inverse proportion is illustrated in Fig. 6. From Fig. 6, the coefficient b is obtained from Expression (8).
[Math. 8]

$$b = -1169.3C + 1705.6 \tag{8}$$

Here, C is the combining efficiency of linear display.
Accordingly, by providing a grating structure satisfying Expressions (1), (2), (7), and (8) in the optical fiber, a mode conversion device that has any coupling efficiency and bandwidth can be configured. That is, a mode conversion device according to the present invention includes a long period grating at a core of an optical fiber through which light is able to propagate in at least two propagation modes. The long period grating satisfies a relationship of Expression C1.
[Math. C1]

$$\Lambda = \frac{2\pi}{\Delta\beta}$$

$$C = sin^2 \left( \frac{\pi}{2} \frac{L_g}{L_c} \right)$$

$$(C1)$$

$$FWHM \cdot L_c = b \left| \frac{d\Delta\beta}{d\lambda} \right|^{-1}$$

$$b = -1169.3C + 1705.6$$

where
a full width at half maximum FWHM is a wavelength band in which the coupling efficiency is a half of coupling efficiency of mode conversion at a center wavelength, C is coupling efficiency, $L_c$ is a complete coupling length, $L_g$ is a grating length, $\Lambda$ is a grating pitch, and $\Delta\beta$ is a propagation constant difference between the two propagation modes at the center wavelength of a mode conversion target.

Here, the calculation is performed by exemplifying conversion efficiency of the LP01 mode and the LP11 mode. However, for example, coupling between other modes, such as the LP01 mode and a cladding mode, the LP01 mode and an LP02 mode, or the LP11 mode and an LP21 mode, can be similarly considered to be applied. Regardless of a step index structure of the optical fiber, another structure such as a graded index structure can be similarly considered.

(Second Embodiment)

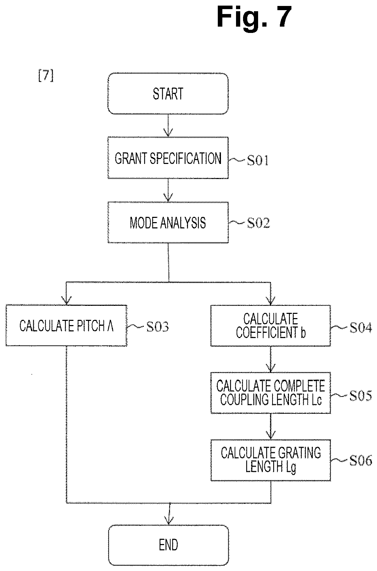

Fig. 7 is a flowchart illustrating a method of designing a long period grating of the mode conversion device described in the first embodiment. The design method is a design method of determining a design parameter of a long period grating installed at a core of an optical fiber through which light is able to propagate in at least two propagation modes.

The design method includes:

granting a core radius a (um) of the optical fiber, a relative refractive index difference $\Delta$ (%), a center wavelength $\lambda_0$ (nm) of the light subjected to mode conversion, coupling efficiency C, and a full width at half maximum FWHM (nm) (step S01);

acquiring a propagation constant difference $\Delta\beta$ between the two propagation modes at the center wavelength $\lambda_0$ (nm) of a mode conversion target and a wavelength differential $d\Delta\beta/d\lambda$ through mode analysis from the core radius a (um) and the relative refractive index difference $\Delta$ (%) of the optical fiber (step S02);

calculating a grating pitch $\Lambda$ of the long period grating in Expression C2 (step S03);

calculating a coefficient b in Expression C3 (step S04) ;

calculating a complete coupling length $L_c$ with Expression C4 (step S05); and

calculating a grating length $L_g$ in Expression C5 (step S06) .

[Math. C2]

$$\Lambda = \frac{2\pi}{\Delta\beta} \qquad (\mathrm{C}\,2)$$

[Math. C3]

$$b = -1169.3\mathrm{C} + 1705.6 \qquad (\mathrm{C}\,3)$$

[Math. C4]

$$L_c = \frac{b}{FWHM \cdot \left|\dfrac{d\Delta\beta}{d\lambda}\right|} \qquad (\mathrm{C}\,4)$$

where, the full width at half maximum FWHM is a wavelength band in which the coupling efficiency is a half of coupling efficiency of mode conversion at the center wavelength $\lambda_0$. [Math. C5]

$$L_g = \frac{\pi}{2}\frac{L_c}{arcsin\left(\sqrt{C}\right)} \qquad (\mathrm{C}\,5)$$

Design parameters are $d\Delta\beta/d\lambda$, $L_c$, $L_g$, $\Lambda$, $\lambda_0$, C, and FWHM indicating an optical fiber structure. First, in step S01, the core radius a (um) of the optical fiber, the relative refractive index difference $\Delta$ (%), the center wavelength $\lambda_0$ (nm) of light subjected to mode conversion, the coupling efficiency C, and the full width at half maximum FWHM (nm) are granted as specification values.

In step S02, from the core radius a (um) and the relative refractive index difference $\Delta$ (%) of the optical fiber structure, the propagation constant difference $\Delta\beta$ at the center wavelength $\lambda_0$ (nm) and the wavelength differential $d\Delta\beta/d\lambda$ are obtained through mode analysis.

In step S03, the propagation constant difference $\Delta\beta$ is substituted into Expression (C2) to calculate the grating pitch $\Lambda$ ($\mu$m).

In step S04, the coupling efficiency C which is a specification value is substituted into Expression (C3) to calculate the coefficient b.

In step S05, the coefficient b, the full width at half maximum FWHM of the specification value, and the wavelength differential $d\Delta\beta/d\lambda$ are substituted into Expression (C4) to calculate the complete coupling length $L_c$.

In step S06, the grating length $L_g$ is calculated by substituting the complete coupling length $L_c$ and the coupling efficiency C as a specification value into Expression C5.

Step S03 and steps (S04 to S06) may be performed simultaneously, or the step S03 or the steps (S04 to S06) may be first performed.

A mode-convertible wavelength range (FWHM) differs depending on a device that uses LPG. For example, when a wide band is used in mode multiplex transmission or the like, the band is preferably wide. On the other hand, in the case of a tap device to be described in a third embodiment, the band is preferably narrow. The design method according to the present embodiment is a point that the grating pitch $\Lambda$ and the grating length $L_g$ can be derived according to a purpose (specification) of the device.

(Third Embodiment)

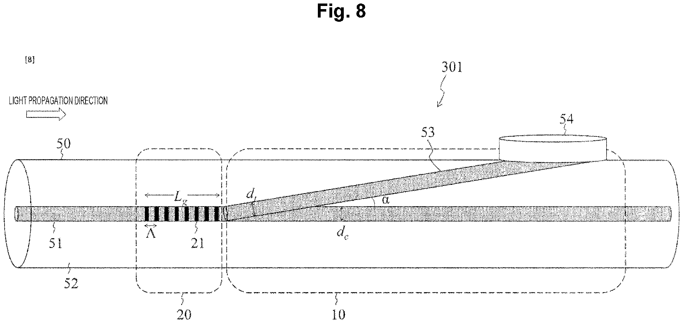

Fig. 8 is a diagram illustrating a mode conversion device 301 of the present embodiment. The mode conversion device 301 further includes a tap waveguide 53 that is at a rear stage of a long period grating 21 in a light propagation direction and that outputs, from a side surface of an optical fiber, light with a desired wavelength converted from one mode to another mode by the long period grating 21 in light propagating through a core 51 of an optical fiber 50.

In the present embodiment, one mode is assumed to be a fundamental mode, and another mode is a higher-order mode in description.

The mode conversion device 301 includes:

a tap unit 10 in which a tap waveguide 53, outputting light in the higher-order mode in the light propagating through the core 51 of the optical fiber 50 from a side surface of the optical fiber 50, is formed; and

a grating unit 20 which is at a front stage of the tap unit 10 in a light propagation direction and in which a grating 21, converting light with a desired wavelength from the fundamental mode to the higher-order mode, is formed at the core 51 of the optical fiber 50.

The optical fiber 50 is assumed to be a step index fiber. In the optical fiber 50, the grating unit 20 and the tap unit 10 are sequentially formed in the longitudinal direction. A direction in which light can be incident on the tap waveguide 53 is defined as an optical waveguide direction. In Fig. 8, the optical waveguide direction is a direction from the left to the right. A direction in which the tap waveguide 53 faces the side surface of the optical fiber 50 from the core 51 is defined as a tap direction. In Fig. 8, the tap direction is a direction inclined in a forward direction with respect to the optical waveguide direction.

The grating unit 20 causes the long period grating 21 to convert light with a wavelength to be extracted in light propagating through the core 51 of the optical fiber 50 by a desired amount from the LP01 mode to the LP11 mode. The grating structure can be implemented, for example, by femtosecond laser machining, CO2 laser machining, or grating pressing.

The tap unit 10 includes the tap waveguide 53 extending from the center of the core 51 to the side surface of the optical fiber 50 (an interface of the cladding 52) at an angle $\alpha$. The tap unit 10 selectively extracts only the LP11 mode from the core 51 by controlling the angle $\alpha$ between the tap waveguide 53 and the core 51, a diameter $d_t$ of the tap waveguide 53, and a refractive index of the tap waveguide 53.

Here, light coupled from the core 51 to the tap waveguide 53 is defined as tap light, and light directly propagating through the core 51 is defined as transmitted light. For example, by connecting a light receiver 54 to an output end (a side surface of the optical fiber 50) of the tap unit 10, it is possible to extract and receive only the tap light from the optical fiber 50.

In the tap unit 10, the coupling efficiency from the core 51 to the tap waveguide 53 strongly depends on the propagation mode of light propagating through the core 51. This is because as the mode is higher, confinement is smaller and coupling to the tap waveguide 53 is easier. Therefore, only the higher-order mode can be transitioned to the tap waveguide.

Here, in order to couple only the higher-order mode to the tap waveguide 53, the refractive index of the tap waveguide 53 and the value of the diameter $d_t$ are important. If these values are too large, an NA of the tap waveguide 53 increases, and the LP01 mode is also easily coupled. Therefore, a loss of the transmitted light increases. Conversely, if these values are too small, the NA of the tap waveguide 53 becomes small, and the high-order mode is hardly coupled. Therefore, coupling efficiency of the tap light to the tap waveguide 53 decreases. That is, it is necessary to appropriately determine the refractive index of the tap waveguide 53 and the value of the diameter $d_t$.

In order to couple the light in the higher-order mode to the tap waveguide 53 with high efficiency and propagate the light in the fundamental mode while being confined in the core 51, it is necessary to make $\alpha$ sufficiently small and transition the mode adiabatically. When $\alpha$ is large, the LP01 mode is also coupled to the radiation mode under an influence of the tap waveguide 51, and a loss occurs. Therefore, an upper limit value of $\alpha$ is determined from the viewpoint of the loss of the LP01 mode. Conversely, $\alpha$ can take any value larger than 0. However, an entire length $L_{tap}$ of the tap unit 10 is settled in accordance with $\alpha$. Therefore, a lower limit value of $\alpha$ is determined from the viewpoint of a required condition for a propagation loss of the tap waveguide 53 and the entire length of the device.

In a general single-mode fiber, a diameter $d_f$ of the optical fiber 50 is 125 um. For example, to set the tap unit $L_{tap}$ to be equal to or less than 5 cm, $\alpha$ is required to be set to equal to or more than 0.07°.

The grating unit 20 includes the grating 21 with the pitch $\Lambda$. For example, the grating 21 is a long period fiber grating (LPG). In order for the grating unit 20 to convert light with any wavelength $\lambda$ and a desired light amount from the LP01 mode to the LP 11 mode, the grating 21 is molded with the design parameters described in the first and second embodiments.

(Fourth Embodiment)

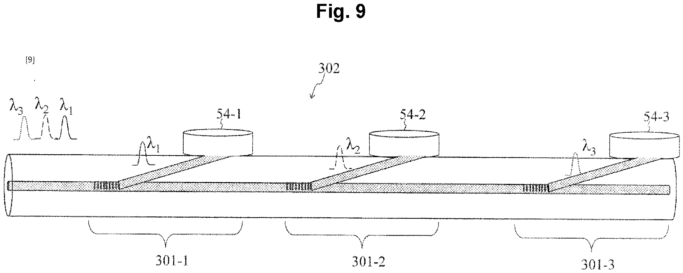

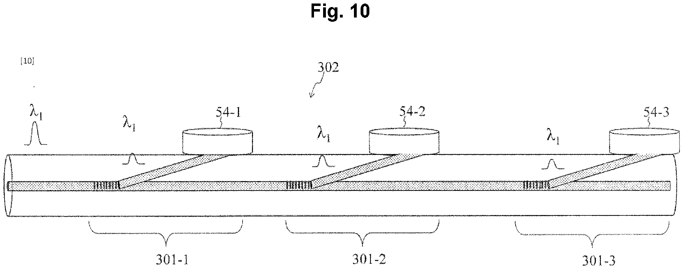

Figs. 9 and 10 are diagrams illustrating the mode conversion device 302 according to the present embodiment. In the mode conversion device 302, at a set of the long period grating 21 and the tap waveguide 53 of the mode conversion device 301 described with reference to Fig. 8 is vertically aligned in the optical fiber 50. That is, the mode conversion device 302 is a system in which the mode conversion devices 301 are combined at multiple stages. A set of the long period grating 21 and the tap waveguide 53 (the mode conversion device 301) is arranged, for example, at a certain distance (several meters to several kilometers).

The long period grating 21 of the mode conversion device 302, in Fig. 9, has different design parameters described in Expression C1 so that wavelengths of light to be converted from the one mode to the other mode are different from each other.

The mode conversion device 302 in Fig. 9 assigns a wavelength to each mode conversion device (301-1, 301-2, and 301-3) and controls a signal to be extracted in accordance with the wavelength. By setting the design parameters of each mode conversion device in accordance with a wavelength interval (the center wavelength $\lambda_0$ and the bandwidth (FWHM)) of a wavelength to be extracted, a signal can be extracted at any wavelength interval.

In the mode conversion device 302 in Fig. 10, the grating length $L_g$ of the long period grating 21 is different so that wavelength of light to be converted from the one mode to the other mode is identical and the coupling efficiency is different.

The mode conversion device 302 in Fig. 10 assigns the plurality of mode conversion devices (301-1, 301-2, 301-3) with respect to one wavelength. By transmitting signals at one wavelength and controlling the coupling efficiency of each LPG, signals can be extracted little by little at multiple stages. The mode conversion device 302 of Fig. 10 can simultaneously output signals from a plurality of places at one wavelength.

Reference Signs List

| | |
|---|---|
| 10 | Tap unit |
| 20 | Grating unit |
| 21 | Long period grating (LPG) |
| 50 | Optical fiber |
| 51 | Core |
| 52 | Cladding |
| 53 | Tap waveguide |
| 54 | Light receiver |
| 301, 302 | Mode conversion device |

**Claims**

1. A mode conversion device comprising a long period grating at a core of an optical fiber through which light is able to propagate in at least two propagation modes,
   wherein the long period grating satisfies a relationship of Expression C1,
   [Math. C1]

$$\Lambda = \frac{2\pi}{\Delta\beta}$$

$$C = sin^2\left(\frac{\pi}{2}\frac{L_g}{L_c}\right)$$

$$(\mathrm{C}\,1)$$

$$FWHM \cdot L_c = b\left|\frac{d\Delta\beta}{d\lambda}\right|^{-1}$$

$$b = -1169.3C + 1705.6$$

where
a full width at half maximum FWHM is a wavelength band in which the coupling efficiency is a half of coupling efficiency of mode conversion at a center wavelength, C is coupling efficiency, $L_c$ is a complete coupling length, $L_g$ is a grating length, $\Lambda$ is a grating pitch, and $\Delta\beta$ is a propagation constant difference between the two propagation modes at the center wavelength of a mode conversion target.

2. The mode conversion device according to claim 1, further comprising a tap waveguide that is at a rear stage of the long period grating in a propagation direction of light and outputs, from a side surface of the optical fiber, light with a desired wavelength converted from one mode to another mode by the long period grating in light propagating through the core of the optical fiber.

3. The mode conversion device according to claim 2, wherein a set of the long period grating and the tap waveguide is vertically aligned in the optical fiber.

4. The mode conversion device according to claim 3, wherein the long period grating has different design parameters described in Expression C1 so that wavelengths of light converted from the one mode to the other mode are different from each other.

5. The mode conversion device according to claim 3, wherein the grating length $L_g$ of the long period grating is different so that a wavelength of light to be converted from the one mode to the other mode is identical and the coupling efficiency is different.

6. A design method of determining a design parameter of a long period grating installed at a core of an optical fiber through which light is able to propagate in at least two propagation modes, the method comprising:

granting a core radius a (um) of the optical fiber, a relative refractive index difference $\Delta$ (%), a center wavelength $\lambda_0$ (nm) of the light subjected to mode conversion, coupling efficiency C, and a full width at half maximum FWHM (nm);
acquiring a propagation constant difference $\Delta\beta$ between the two propagation modes at the center wavelength $\lambda_0$ (nm) of a mode conversion target and a wavelength differential $d\Delta\beta/d\lambda$ through mode analysis from the core radius a (um) and the relative refractive index difference $\Delta$ (%) of the optical fiber;
calculating a grating pitch $\Lambda$ of the long period grating in Expression C2;
calculating a coefficient b in Expression C3;
calculating a complete coupling length $L_c$ with Expression C4; and
calculating a grating length $L_g$ in Expression C5, [Math. C2]

$$\Lambda = \frac{2\pi}{\Delta\beta}$$

$$(\mathrm{C}\,2)$$

[Math. C3]

$$b = -1169.3C + 1705.6 \qquad (C\,3)$$

[Math. C4]

$$L_c = \frac{b}{FWHM \cdot \left|\frac{d\Delta\beta}{d\lambda}\right|} \qquad (C\,4)$$

where, the full width at half maximum FWHM is a wavelength band in which the coupling efficiency is a half of coupling efficiency of mode conversion at the center wavelength $\lambda_0$, [Math. C5]

$$L_g = \frac{\pi}{2} \frac{L_c}{arcsin(\sqrt{C}\,)} \qquad (C\,5)$$

.

# Fig. 1

[1]

(a) WHEN $L_g$=$L_c$ (COUPLING EFFICIENCY OF 100%)

(b) WHEN $L_g$<$L_c$ (COUPLING EFFICIENCY < 100%)

## Fig. 2

# Fig. 3

**Fig. 4**

| Δ(%) | 0.27 | 0.33 | 0.42 |
|---|---|---|---|
| a (μm) | 5 | 4.5 | 5 |
| $\lambda_0$=1250 nm | ⊖ | ⊞ | ⊿ |
| $\lambda_0$=1300 nm | -⊖- | -⊞- | -⊿- |
| $\lambda_0$=1350 nm | -⊖· | -⊟· | -⊿· |
| $\lambda_0$=1400 nm | -⊖- | -⊟- | -⊿- |

# Fig. 5

# Fig. 6

b = -1169.3C + 1705.6

# Fig. 7

[7]

START

GRANT SPECIFICATION — S01

MODE ANALYSIS — S02

CALCULATE PITCH Λ — S03

CALCULATE COEFFICIENT b — S04

CALCULATE COMPLETE COUPLING LENGTH Lc — S05

CALCULATE GRATING LENGTH Lg — S06

END

**Fig. 8**

**Fig. 9**

# Fig. 10

**INTERNATIONAL SEARCH REPORT**

| International application No. |
| --- |
| PCT/JP2021/005851 |

| A. CLASSIFICATION OF SUBJECT MATTER |
| --- |
| G02B 6/02(2006.01)i; G02B 6/14(2006.01)i<br>FI: G02B6/14; G02B6/02 461 |
| According to International Patent Classification (IPC) or to both national classification and IPC |

| B. FIELDS SEARCHED |
| --- |
| Minimum documentation searched (classification system followed by classification symbols)<br>G02B6/02; G02B6/14 |

| Documentation searched other than minimum documentation to the extent that such documents are included in the fields searched |  |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used)<br>Scopus, IEEE Xplore |
| --- |

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2017-156641 A (NIPPON TELEGR & TELEPH CORP) 07 September 2017 (2017-09-07) paragraphs [0019], [0022], [0025], [0028] | 1<br>2-5<br>6 |
| Y<br>A | JP 62-229110 A (THE BOARD OF TRUSTEES OF THE LELAND STANFORD JUNIOR UNIVERSITY) 07 October 1987 (1987-10-07) page 10, upper right column, line 4 to page 13, lower right column, line 20, fig. 10-11 | 2-5<br>6 |
| Y<br>A | FANG, Jian et al. low-DMD few-mode fiber with distributed long-period 5 grating. Optics letters., 17 August 2015, vol. 40, no. 17, pp. 3937-3940 fig. 6 | 5<br>6 |
| A | US 5216739 A (HIU, Kenneth O.) 01 June 1993 (1993-06-01) entire text, all drawings | 1-6 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 April 2021 (14.04.2021) | Date of mailing of the international search report<br>27 April 2021 (27.04.2021) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2021/005851

| Patent Documents referred in the Report | Publication Date | Patent Family | Publication Date |
|---|---|---|---|
| JP 2017-156641 A | 07 Sep. 2017 | (Family: none) | |
| JP 62-229110 A | 07 Oct. 1987 | US 4828350 A column 10, line 36 to column 15, line 4, fig. 10-11 EP 229711 A2 EP 627640 A2 KR 1987-0007433 A | |
| US 5216739 A | 01 Jun. 1993 | CA 2057232 A1 | |

Form PCT/ISA/210 (patent family annex) (January 2015)

**REFERENCES CITED IN THE DESCRIPTION**

**Non-patent literature cited in the description**

- **CRAIG D. POOLE.** Helical-Grating Two-Mode Fiber Spatial-Mode Coupler. *JOURNAL OF LIGHTWAVE TECHNOLOGY,* May 1991, vol. 9 (5.